# EUROPÄISCHE PATENTSCHRIFT

(11) **EP 0 807 883 B1**
(45) Veröffentlichungstag und Bekanntmachung des Hinweises auf die Patenterteilung: **09.07.2003**
(21) Anmeldenummer: 97201240.5
(22) Anmeldetag: 25.04.1997
(51) Int. Cl.: G06F 9/46, G06F 9/44

(54) **Kommunikationssystem mit Mitteln zum Austausch von Softwareprozessen**
Communications system with means for exchanging software processes
Système de communication avec moyen pour échanger des processus de logiciel

(30) Priorität: 06.05.1996 DE 19617976
(43) Veröffentlichungstag der Anmeldung: 19.11.1997
(73) Patentinhaber: Philips Intellectual Property & Standards GmbH, 20099 Hamburg (DE); Koninklijke Philips Electronics N.V., 5621 BA Eindhoven (NL)
(72) Erfinder: Hauptmann, Steffen, Dr.-Ing., Röntgenstrasse 24, 22335 Hamburg (DE); Wasel, Josef, Dr.rer.nat., Röntgenstrasse 24, 22335 Hamburg (DE)
(74) Vertreter: Volmer, Georg, Dipl.-Ing.

(56) Entgegenhaltungen:
- EP-A- 0 587 089
- US-A- 5 155 847
- HAUPTMANN S., WASEL J.: "ON-LINE MAINTENANCE WITH ON-THE-FLY SOFTWARE REPLACEMENT" 1996 , PROCEEDINGS OF INTERNATIONAL CONFERENCE ON CONFIGURABLE DISTRIBUTED SYSTEMS, ANNAPOLIS, MD, USA, 6-8 MAY 1996, IEEE COMPUTER SOCIETY PRESS , LOS ALAMITOS, CA, USA --- XP002134719 * das ganze Dokument *
- APEL U.: "ONLINE-SOFTWARE-ERWEITERUNG UND -ÄNDERUNG" ELEKTRISCHES NACHRICHTWESEN, Bd. 64, Nr. 4, 1990, Seiten 327-333, XP000901060 ISSN: 1242-0557
- GUPTA D ET AL: "ON-LINE SOFTWARE VERSION CHANGE USING STATE TRANSFER BETWEEN PROCESSES" SOFTWARE PRACTICE & EXPERIENCE,GB,JOHN WILEY & SONS LTD. CHICHESTER, Bd. 23, Nr. 9, 1. September 1993 (1993-09-01), Seiten 949-964, XP000655865 ISSN: 0038-0644

## Beschreibung

Die Erfindung bezieht sich auf ein Kommunikationssystem mit einer Steuerschaltung, welche
- ein nachrichtenorientiertes Betriebssystem, Anwendungssoftware und Mittel zum Austausch von Anwendungssoftware enthält, und
- im Austauschfall dazu vorgesehen ist, eine zu ersetzende, alte Softwarekomponente zu veranlassen einen Zustandstransfer durchzuführen und an einem bestimmten Punkt anzuhalten und einer neuen Softwarekomponente die anliegenden Nachrichten zuzuleiten.

Kommunikationssysteme enthalten Computersysteme oder Steuerschaltungen, deren Software langlebig und praktisch dauernd verfügbar sein soll. Bei Fehlern in der Software oder auch aufgrund neuer Anforderungen müssen bestimmte Softwarekomponenten erneuert werden. Dabei sollte die Ausfallzeit des Kommunikationssystems minimiert werden.

Ein Kommunikationssystem, welches praktisch keine Ausfallzeit bei dem Austausch einer Softwarekomponente eines Vermittlungssystems aufweist, ist aus der US-A-5 155 837 bekannt. Vor dem Austausch werden zuerst die Inhalte und Zustände aller Register, Prozesse und Speichereinheiten in einem speziellen Speicher während des Betriebes der alten Software gesichert (Spalte 7, Zeilen 30 bis 36). Die alte Version der Software ist dabei in einer ersten Partition geladen. Die neue Software wird anschließend in eine zweite Partition geladen. Nachdem die neue Software geladen und getestet worden ist, werden aus dem Speicher die Inhalte und Zustände aller Register, Prozesse und Speichereinheiten auf die neue Software übertragen. Diese wird dann in Betrieb genommen. Die neue Software beginnt dabei jedoch nicht an dem Prozeßpunkt zu arbeiten, an dem die alte Software angehalten worden ist, sondern an einem definierten Programmpunkt. Es werden auch nicht einzelne Softwaremodule oder -komponenten, sondern eine in sich geschlossene Software ausgetauscht.

Des weiteren ist aus dem Dokument "Elektrisches Nachrichtenwesen, Band 64, Nummer 4, 1990, Seiten 327 bis 333" bekannt, Softwarekomponenten während des Betriebes beispielsweise einer Vermittlungsanlage auszutauschen. Hierbei wird von dem System bei einem Austausch ein alte Softwarekomponente zur Durchführung eines erforderlichen Zustandstransfers veranlaßt. Beim Erreichen von vordefinierten Synchronisationspunkten wird die alte Softwarekomponente angehalten und Nachrichten von der alten zur neuen Softwarekomponente umgeleitet. Die neue Softwarekomponente wird gestartet und die alte Softwarekomponente beendet und entfernt. Einzelheiten über den Aufbau der zum Austausch vorgesehenen Programme lassen sich dem Dokument nicht entnehmen.

Der Erfindung liegt daher die Aufgabe zugrunde, eine realisierbare Austauschprozedur von Softwarekomponenten anzugeben, bei welcher außer einer kurzen Verzögerung keine Einschränkung des Betriebes erfolgt.

Die Aufgabe wird durch ein Kommunikationssystem der eingangs genannten Art dadurch gelöst,
daß die Anwendungssoftware wenigstens einen Prozeß mit wenigstens einem Anwendungsthreads und einem Austauschthread enthält,
daß ein alter, zum Austausch vorgesehener Prozeß wenigstens zur Sammlung seiner Zustände vorgesehen ist, nachdem die Anwendungsthreads des alten Prozesses an einem Austauschpunkt angehalten haben, und
daß der Austauschthread des alten Prozesses wenigstens zur Übertragung der Zustände über Austausch-Ports an einen neuen Prozeß vorgesehen ist.

Die erfindungsgemäße Austauschprozedur betrifft Prozesse mit beispielsweise mehreren Threads (in sich selbst sequentiell ablaufende Programmstücke), die für die Steuerung des Austausches einen Austauschthread enthalten. Durch die Erfindung wird der Neustart wenigstens eines neuen Prozesses an dem entsprechenden Programmpunkt (Austauschpunkt) durchgeführt, an dem der alte Prozeß angehalten worden ist. Außerdem werden alle Zustände des alten Prozesses mittels eines Austauschthreads des alten Prozesses zum neuen Prozeß übertragen. Dies kann aber nur für solche Systeme gelten, die ein Betriebssystem aufweisen, welches den Austausch von Nachrichten zwischen Softwarekomponenten ermöglicht (z.B. CHORUS). Hierbei werden Nachrichten über Softwareschnittstellen, die im folgenden als Ports bezeichnet werden, zwischen verschiedenen Prozessen ausgetauscht. Der Austausch der Zustände erfolgt dabei über Austausch-Ports des alten und neuen Prozesses.

Der Austausch eines Prozesses erfolgt dabei so, daß kein anderer Prozeß davon berührt wird. Die von einem anderen Klienten (anderer Prozeß) eintreffenden Nachrichten werden nämlich auf den neuen Prozeß übertragen und nach dem Austausch weiterverarbeitet. Der Autausch erfolgt dabei so, daß nur eine kurze Verzögerung bei der Bearbeitung entsteht. Praktische Untersuchungen haben ergeben, daß die Verzögerungszeit im Bereich weniger Millisekunden liegt.

Ein Kommunikationssystem kann ein Computersystem sein, eine Vermittlungsstelle, ein Computernetzwerk oder auch Serversysteme, wie z.B. ein Vide-On-Demand-Server. Ein Computerssystem enthält wenigstens einen Computer, in dem eine Softwarekomponente ausgetauscht werden soll.

Ein Anwendungsthread enthält einen ersten Teil zur Sammlung wenigstens der Zustände des Anwendungsthreads eines alten, zum Austausch vorgesehenen Prozesses und ist zur Lieferung der gesammelten Zustände zum Austauschthread des alten Prozesses vorgesehen. Ein Anwendungsthread eines neuen Prozesses enthält einen zweiten Teil zur Übernahme der Zustände von dem Austauschthread des alten Prozesses und zur Rekonstruktion von auf die Zustände bezogenen Objekten.

Der Austausch eines Prozesses wird von einem Austauschmanager eingeleitet. Dieser ist in der Steuerschaltung als weitere Softwarekomponente enthalten und ist zum Laden und Starten eines Prozesses und zur Kennzeichnung vorgesehen, ob ein neu gestarteter Prozeß einen alten Prozeß zu ersetzen hat. Eine Wartungsvorrichtung liefert einen neuen Prozeß über ein Übertragungsmedium an den Austauschmanager.

Bei einem vorgesehenen Austausch von mehreren Prozessen sind diese jeweils hintereinander zum Austausch vorgesehen. Es wird also zuerst ein erster Prozeß ausgetauscht und dann hintereinander die folgenden Prozesse. Die Steuerung bei diesem Austausch mit mehreren Prozessen kann der Austauschmanager übernehmen.

Nach dem Laden und Starten eines neuen Prozesses, der zum Austausch eines alten Prozesses vorgesehen ist, ist zuerst ein Sprung zu einem dem Austauschpunkt des alten Prozesses entsprechenden Austauschpunkt durch Überspringen normaler Programmabläufe vorgesehen.

Die Erfindung bezieht sich auch auf ein Computersystem mit wenigstens einem Computer und ein Verfahren zum Austausch von Softwarekomponenten.

Ausführungsbeispiele der Erfindung werden nachstehend anhand der Figuren näher erläutert. Es zeigen:
- Fig. 1: ein Computersystem mit einer Wartungsvorrichtung und einem Computer, der austauschbare Prozesse enthält,
- Fig. 2: ein Computersystem, das ein lokales Netzwerk enthält,
- Fig. 3: eine symbolische Darstellung eines Prozesses,
- Fig. 4: eine symbolische Darstellung eines neuen und alten Prozesses während des Austausches,
- Fig. 5: eine symbolische Darstellung eines neuen und alten Prozesses nach dem Austausch,
- Fig. 6: ein Vermittlungssystem mit einer Wartungsvorrichtung und einer Steuerschaltung, die austauschbare Prozesse enthält und
- Fig. 7: ein Nachrichtenflußdiagramm zwischen einem alten und neuen Prozeß.

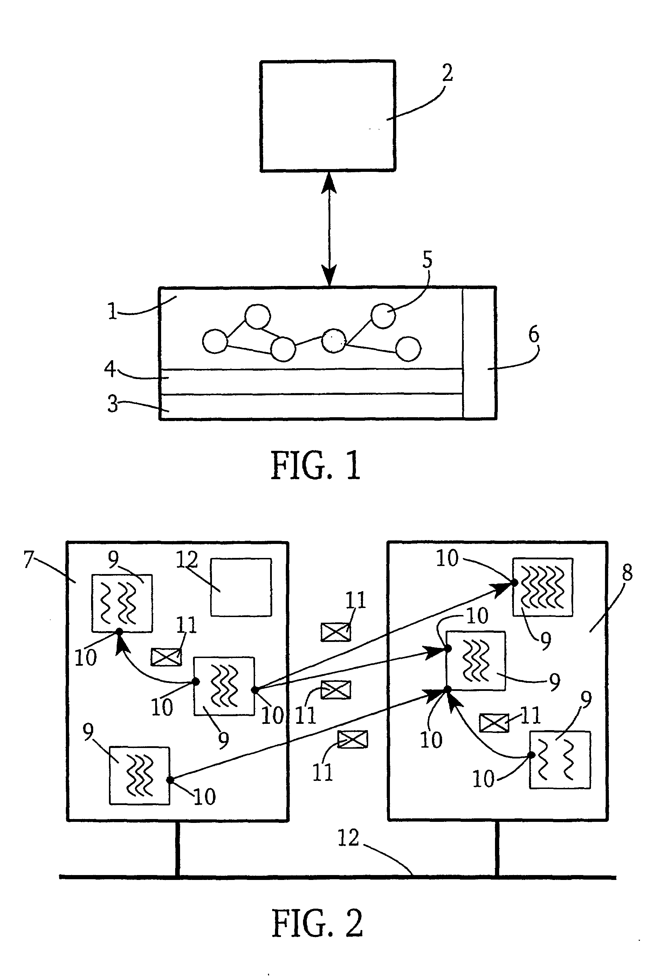

In Fig. 1 is ein Computersystem mit einem Computer 1 und einer Wartungsvorrichtung 2 dargestellt. Der Computer enthält Hardwarekomponenten 3, ein Betriebssystem 4, Anwendungssoftware 5 und einen Austauschmanager 6. Das Betriebssystem 4 muß eine Kommunikation zwischen Softwarekomponenten der Anwendungssoftware 5 über Nachrichten ermöglichen (z.B. nachrichtenorientiertes Betriebssystem (message based operating system)). Die Nachrichten oder Daten werden dabei über Softwareschnittstellen ausgetauscht. Im folgenden wird eine Softwareschnittstelle als Port bezeichnet.

Der Austauschmanager 6 ist eine Softwareprogramm, mit dessen Hilfe Komponenten der Anwendungssoftware 5 ausgetauscht werden können. Eine auszutauschende Softwarekomponente ist ein Prozeß (actor), der mehrere Threads enthält. Ein Thread ist ein in sich selbst sequentiell ablaufendes Programmstück. In der Fig. 1 sind die einzelnen Softwarekomponenten durch Kreise dargestellt. Die Verbindungen zwischen den Kreisen sollen Nachrichtenflüsse zwischen den Softwarekomponenten andeuten.

Die Wartungsvorrichtung 2 könnte ein entfernt liegender Computer sein, von dem aus eine neue Softwarekomponente geliefert wird. Hierbei ist es denkbar, daß die neue Softwarekomponente an diesem Computer entwickelt und getestet wird. Zur Übertragung der neuen Softwarekomponente können bekannte Übertragungsmedien und Protokolle verwendet werden. Beispielsweise ist eine Übertragung über ein Telefonnetz möglich. Die neue Softwarekomponente könnte aber auch direkt in den Computer 1 geladen werden (z.B. mit Hilfe einer lokalen Wartungsvorrichtung (Laptop)).

In Fig. 2 ist ein weiteres Beispiel für ein Computersystem dargestellt. Das Computersystem ist als lokales Netzwerk (local area network) ausgebildet, welches über verschiedene Knoten (z.B. Personal Computer, Workstations etc.) verfügt, die über Hardwareschnittstellen (z.B. Ethernet-Schnittstelle) miteinander gekoppelt sind. Fig. 2 zeigt exemplarisch zwei Knoten 7 und 8 des Netzwerkes, die jeweils Anwendungssoftware mit mehreren Prozessen 9 enthalten. Ein solcher Prozeß enthält einen geschützen Adreßraum, verwaltet eine Anzahl von Ports, über die der Prozeß mit anderen Prozessen Nachrichten 11 austauscht und - wie oben schon erwähnt - mehrere Threads, die in Fig. 2 als Schlangenlinien dargestellt sind. Ein Prozeß 9 kann nur Nachrichten 11 über seine Ports 10 senden oder empfangen. Die Knoten 7 und 8 sind mit weiteren nicht dargestellten Knoten des Netzwerks über eine Netzwerkverbindung 12 gekoppelt.

Threads in einem Prozeß können auch über eigene Ports Nachrichten austauschen. Weiter können Nachrichten z.B. auch über Mutexes und Semaphores ausgetauscht werden. Ein Mutex (mutual exclusions) stellt eine Methode dar, die nur einem Thread den Zugriff auf einem bestimmten Bereich ermöglicht. Beispielsweise sollen Daten von einen Thread zu einem Drucker gesendet werden. In diesem Fall wird von dem Thread ein Mutex gesetzt, so daß nur dieser Thread Daten an den Drucker senden kann. Ein anderer Thread kann dann keine Daten zum Drucker geben. Ein Semaphore stellt eine Methode dar, die nur einer bestimmten Anzahl von Thread den Zugriff auf einen bestimmten Bereich ermöglicht. Nachrichten zwischen Threads von verschiedenen Prozessen können nur über die Ports der jeweiligen Prozesse ausgetauscht werden.

Als verteiltes Betriebssystem für das lokale Netzwerk, von dem Fig. 2 einen Ausschnitt zeigt, kann CHORUS (vgl. Rozier, M.; Abrossimov, V.; Armand, F.; Boule, I.; Gien, M.; Guillemont, M.; Herrmann; F.; Kaiser, C.; Langlois, S.; Leonard, P.; Neuhauser, W.: Overview of the CHORUS distributed operating systems; CHORUS systémes Technical Report CS-TR-90-25, 1990) verwendet werden. Für die Anwendungssoftware kann beispielsweise die Programmiersprache C oder C++ gewählt werden.

Zur Steuerung des Austausches von wenigstens einem Prozeß 9 des Netzwerkes in Fig. 2 ist noch ein Austauschmanager 12 in dem Knoten 7 enthalten. Dieser Austauschmanager 12 könnte auch Bestandteil eines anderen Knoten (z.B. Knoten 8) anstatt des Knotens 7 sein.

Bei der Ersetzung oder Austausch wenigstens eines Prozesses, der von dem Austauschmanager 6 (Fig. 1) bzw. 12 (Fig. 2) gesteuert wird, wird die neue Softwarekomponente (neuer Prozeß) in den Computer 1 (Fig. 1) bzw. in einen Knoten 7 oder 8 des Netzwerkes (Fig. 2) geladen und gestartet. Anschließend werden alle Anwendungsthreads der alten Softwarekomponente (alter Prozeß) angehalten und der alte Prozeß sammelt die Zustände aller Objekte. Der neue Prozeß erhält die von dem alten Prozeß gesammelten Zustände, und die Ports des alten Prozesses mit allen anhängigen Nachrichten wandern zu dem neuen Prozeß. Nachdem die Objektstrukturen zwischen dem alten und neuen Prozeß angepaßt worden sind, werden die Threads des neuen Prozesses dann an dem Punkt gestartet, der dem Punkt des alten Prozesses entspricht. Zum Schluß wird der alte Prozeß gelöscht.

Damit dieser Austausch während des Betriebes des Computer oder des lokalen Netzwerkes, durchgeführt werden kann, sind in den Komponenten bzw. Prozessen der Anwendungssoftware noch bestimmte Veränderungen gegenüber nicht austauschbaren Komponenten vorgenommen worden. In jedem Prozeß, der austauschbar sein soll, ist ein zusätzlicher Thread, der als Austauschthread bezeichnet wird und die Austauschprozedur durchführt, und weiter ein zusätzliches Austausch-Port, welcher zur Kommunikation beim Austausch dient, enthalten.

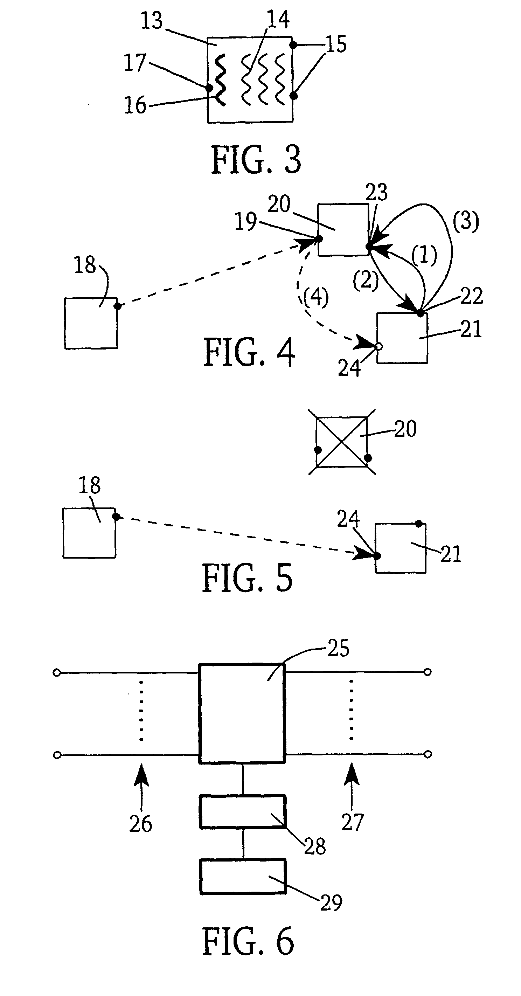

In Fig. 3 ist symbolisch gezeigt, was ein zum Austausch geeigneter Prozeß enthalten muß. Der Prozeß 13 ist als Quadrat und dessen Anwendungsthreads 14 jeweils als Schlangenlinien dargestellt. Der Prozeß 13 tauscht Daten mit einem Klienten über Ports 15. Ein Klient ist eine andere Softwarekomponente. Wie oben erwähnt, besitzt der austauschbare Prozeß zusätzlich einen Austauschthread 16 und einen zusätzlichen Austausch-Port 17.

Aus Fig. 4 sind die Nachrichtenflüsse ersichtlich, die bei einem Austausch oder Ersetzung eines Prozesses ablaufen. Ein Klient 18 sendet Nachrichten zu einem Port 19 (im folgenden als Dienst-Port bezeichnet) eines bisher installierten Prozesses 20. Der Prozeß 20 (Vorgängerkomponente) soll durch einen neuen Prozeß 21 (Nachfolgerkomponente) ersetzt werden. Nachdem die Nachfolgerkomponente 21 geladen und gestartet worden ist, wird von einem Austausch-Port 22 der Nachfolgerkomponente 21 ein Austauschbefehl zum Austausch-Port 23 der Vorgängerkomponente 20 gesendet. Der Austauschbefehl ist in Fig. 4 durch einen Pfeil mit der Bezeichnung (1) angegeben. Nachdem die Vorgängerkomponente 20 angehalten hat, sammelt sie ihre Zustände und liefert sie an den Austausch-Port 22 der Nachfolgerkomponente 21 (Pfeil (2)). Nachdem alles übertragen worden ist, wird dies der Vorgängerkomponente 20 mitgeteilt (Pfeil (3)). Dann wird für den Klienten 18 das Dienst-Port 19 des alten Prozesses als neues Dienst-Port 24 mit den anhängigen Nachrichten zugänglich. Diese Port-Wanderung ist durch den gestrichelten Pfeil mit der Bezeichnung (4) angedeutet.

Fig. 5 zeigt dann den Nachrichtenfluß nach dem Austausch. Der Klient 18 sendet jetzt Nachrichten zum Dienst-Port 24 der Nachfolgerkomponente 21. Die Vorgängerkomponente 20 ist gelöscht, was durch die zwei gekreuzten Striche über dem die Vorgängerkomponente 20 repräsentierenden Quadrat angedeutet ist.

Bei der oben angegebenen Austauschprozedur ist von einem austauschbaren Prozeß ausgegangen worden. Falls mehrere Prozesse ausgetauscht werden sollen, kann diese Austauschprozedur in Teilschritte zerlegt werden. Ein Teilschritt ist dabei der Austausch jeweils eines Prozesses. Hierdurch ist es einfacher die Austauschprozedur zu kontrollieren und der erforderliche Speicherbedarf ist geringer als bei einem gleichzeitigen Tausch mehrerer Prozesse.

Ferner können bestimmte neue Prozesse, die einen alten Prozeß ersetzen sollen, beispielsweise auch neue Funktionen aufweisen. Um die Kompatibilität mit dem alten Prozeß zu erhalten, ist es erforderlich die bisherigen Funktionen weiter im neuen Prozeß bereitzustellen. Wenn alle Klienten, welche die alten Funktionen benutzt haben, verschwunden sind, kann die alte Funktionalität für ungültig erklärt werden und bei einem späteren Austausch ganz verschwinden.

In den Fig. 1 und 2 sind zwei Anwendungsmöglichkeiten für eine austauschbare Software während des Betriebes dargestellt. Eine weitere Anwendungsmöglichkeit besteht für Systeme, welche zur Übertragung von Nachrichten vorgesehen sind. Ein Beispiel ist ein Vermittlungssystem, dessen wesentliche Blöcke in Fig. 6 gezeigt sind. Das Vermittlungssystem enthält ein Koppelfeld 25 welches auf Eingangsleitungen 26 empfangene Signale an eine oder mehrere Ausgangsleitungen 27 weitergibt. Zur Steuerung des Koppelfeldes dient eine Steuerschaltung 28, die außer den notwendigen Hardwarebestandteilen ein Betriebssystem, Anwendungssoftware und einen Austauschmanager enthält. Zum Austausch von Komponenten der Anwendungssoftware ist eine Wartungsvorrichtung 29 vorgesehen, die mit der Steuerschaltung 28 auf dieselbe Weise wie die Wartungsvorrichtung 2 mit dem Computer 1 zusammenarbeitet.

Wie oben ausgeführt, ist ein Austauschthread Teil eines Prozesses und notwendig zum Austausch des Prozesses. Ein solcher Austauschthread versieht die Anwendungsthreads in dem Prozeß mit einer Schnittstelle, welche einen Prozeß austauschbar macht. Eine Implementierung der Schnittstelle in der Programmiersprache C++ ist eine Klassendefinition, die z.B. mit "ExcThread" bezeichnet werden kann. Ein Anwendungsthread hat exakt eine Instanz von dieser Klasse "ExcThread". Die Klasse weist drei Methoden auf: "getExcInfo", "setExcInfo" und "restartPointReached".

Die Methode "ExcThread::getExcInfo" ist einmal zu Beginn jedes Anwendungsthread aufzurufen. Sie liefert die Information, ob eine Anwendungskomponente neu gestartet oder eine ältere Version dieser Komponente ersetzt wird. Bei einem Austausch liefert die Methode "ExcThread::getExcInfo" den Zustand des Anwendungsthreads der älteren Komponente und einen Parameter, welcher den Punkt beschreibt, an welchem der Anwendungsthread des neuen Prozesses wieder zu starten ist.

Sobald der Anwendungsthread des neuen Prozesses alle Objekte wieder rekonstruiert hat, hat es die Methode "ExcThread::restartPointReached" aufzurufen. Diese Methode wird zur Synchronisierung des Starts aller Anwendungsthreads verwendet. Es muß garantiert werden, daß kein Anwendungsthread diese Methode verläßt, bevor alle Threads diese benutzen. Dadurch wird gesichert, daß alle Objekte initialisiert werden, bevor diese von irgendeinem Anwendungsthread benutzt werden. Das ist insbesondere für solche Objekte wichtig, die verschiedene Anwendungsthreads teilen, z.B. Ports oder Semaphores.

Die Methode "ExcThread::setExcInfo" ist einmal von jedem Anwendungsthread aufzurufen, nachdem der Anwendungsthread für den Austausch gestoppt worden ist. Diese Methode wird benötigt, um den gegenwärtigen Zustand dieses Anwendungsthread seiner entsprechenden neuen Komponente zu liefern.

Ein Zustandstransfer wird benötigt, damit der neue Prozeß z:b. Zustände von dem alten Prozeß übernimmt. Der Zustandstransfer wird zwischen dem Anhalten des alten Prozesses und dem Starten des neuen Prozesses durchgeführt. Beispielsweise ist ein Zustandstransfer erforderlich, um den Zustand eines alten Telefonbuches in den Zustand eines neuen Telefonbuches abzubilden. Ein solcher Transfer ist z.B. dann erforderlich, wenn ein neues Feld "Postleitzahlen" hinzukommt oder dieses Feld einen anderen Typ erhält (z.B. 5 anstatt 4 Zeichen).

Der Zustandtransfer eines Prozesses bedeutet, daß alle Zustände seiner Objekte übertragen werden müssen. Hierbei wird jedes Objekt mit zwei Methoden versehen. Eine Methode holt die Zustände und eine Methode legt die Zustände ab.

Der Austauschvorgang beginnt durch das Anhalten aller Anwendungsthreads eines Prozesses an einem Punkt, an dem sie anhalten können. Diese Punkte werden als Anhaltepunkte bezeichnet. Bei Erreichen eines Anhaltepunktes in einem Thread wird seine normale Operation abgebrochen und Operationen durchgeführt, die sich auf den Austausch beziehen. Als Anhaltepunkte werden solche Synchronisations- und Kommunikationspunkte gewählt, an denen ein Thread anhalten kann.

Es müssen beim neuen Prozeß zu den Anhaltepunkten entsprechende Punkte vorhanden sein, an denen der neue Prozeß gestartet werden kann. Diese Punkte werden Restartpunkte genannt. Die Anhalte- und Restartpunkte werden als Austauschpunkte bezeichnet. Der neue Prozeß kann sich gegenüber dem alten Prozeß im Programmcode und bei den Objektstrukturen unterscheiden. Einige Objekte können beim neuen Prozeß verschwunden, hinzugefügt oder verändert worden sein.

Folgende Punkte sind Beispiele für Austauschpunkte:
Port::call
Port::receive
Semaphore::get
Mutex::get
Thread::delay

Es ist hierbei die Schreibweise der Programmiersprache C++ gewählt worden. Zuerst wird der Klassenname eingeführt und nach den beiden Doppelpunkten der Methodenname (ClassName::MethodName). Beispielsweise bedeutet "Mutex::get" eine Methode "get", die für alle Objekte vom Typ "Mutex" verfügbar ist.

Falls die Zeit für einen Austausch zu lang ist, könnte ein Problem bei bestimmten Anwendungen auftreten (z.B. beim Austausch von Softwarekomponenten in einer Vermittlungsanlage). Dies tritt auf jeden Fall dann nicht ein, wenn folgende fünf Bedingungen erfüllt sind:
R1) Eine Anwendung läuft auf einem System mit einem einzigen Prozessor.
R2) Die Last des Prozessors ist unter 100%.
R3) Es ist sichergestellt, daß innerhalb eines gegebenen Zeitintervalls ein Prozeß eine bestimmte Prozessorzeit garantiert bekommt.
R4) Es ist nicht erlaubt, daß ein Thread asynchron gestoppt wird, d.h nicht an einem Anhaltepunkt gestoppt wird.
R5) Ein in einem Austauschpunkt befindlicher Thread kann in der Weise abgebrochen werden, daß er den Anhaltepunkt verläßt und daß er normal weiterläuft.

Wenn ein Prozessor vorhanden ist (R1) und dieser Prozessor hat eine Last von unter 100% (R2), dann existiert ein Zeitpunkt, zu dem alle Threads eines Prozesses angehalten worden sind. Wenn ein Austauschthread mit einer Priorität kleiner als die Prioritäten der anderen Anwendungsthreads des Prozesses vorhanden ist, dann wird der Austauschthread zu diesem Zeitpunkt aktiv, weil der Prozeß immer einen Teil der verfügbaren Prozessorzeit innerhalb eines gegebenen Zeitintervalls erhält (R3). Es ist garantiert, daß alle Anwendungsthreads mit Ausnahme des Austauschthreads selbst an einem Anhaltepunkt gestoppt haben (R4). Der Austauschthread benutzt dann die zur Verfügung gestellte Prozessorzeit zur Ausführung des Austauschvorgangs und bricht dazu alle im Anhaltepunkt befindlichen Anwendungsthreads ab (R5).

Wenn jeder Anhaltepunkt ein Austauschpunkt ist, steht häufig eine große Anzahl von Austauschpunkten zur Verfügung. Viele von den Austauschpunkten können einfache Mutex-Operationen sein, die den parallelen Zugriff auf gemeinsame Daten verhindern. Verschiedene Betriebssysteme erlauben nicht den einfachen Abbruch von Threads, die in einem Mutex angehalten haben. Daher könnte ein Mutex, der mit "Mutex::get" beginnt und mit "Mutex::rel" beendet wird, als potentieller Austauschpunkt ausgeschlossen werden. Unter der Bedingung, daß zwischen "Mutex::get" und "Mutex::rel" kein weiterer Anhaltepunkt liegt und daß der Mutex nur von den Threads in demselben Prozeß benutzt wird, kann nachgewiesen werden, daß kein Thread in diesem Mutex angehalten wird, wenn alle Threads angehalten sind. Somit kann unter diesen Bedingungen ein Mutex als Austauschpunkt ausgeschlossen werden.

Bei der Realisierung eines Austauschpunktes wird eine Methode verwendet, bei der sich der auszutauschende Thread selbst in einen Abbruchszustand versetzt. Das Betriebssystem hebt in einem solchen Fall mit einem speziellen Rückkehrcode, der außerdem einen Fehlercode "Abbruch" angibt, die Abbruchssituation auf. Dieser Rückkehrcode bei einem Abbruch kann direkt als Signal für einen Austausch interpretiert werden. Im folgenden ist ein in der Programmiersprache C++ geschriebenes Beispiel für "Port::receive" (Anhaltepunkt) aufgeführt, welches noch zu einem nicht austauschbaren Thread gehört:

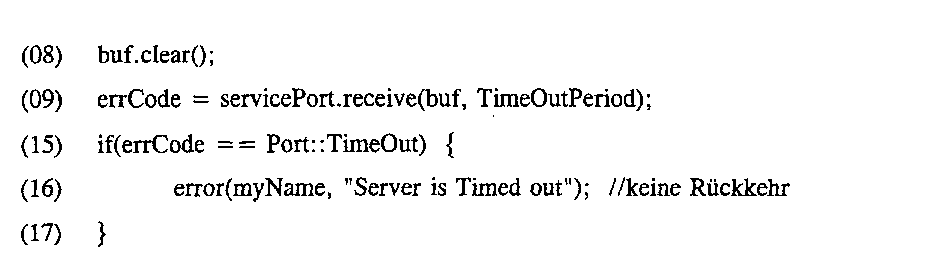

Die in Klammern angegebenen Nummern des Beispieles sind nicht Bestandteil des Programmtextes und dienen nur zur Kennzeichnung der Zeilen. In Zeile (08) wird der Puffer "buf" für die zu empfangenden Daten freigesetzt. Mit dem "receive"-Statement in Zeile (09) wird der Puffer "buf" mit neuen Daten gefüllt. Der zweite Parameter "TimeOutPeriod" des "receive"-Statements ist eine Zeitüberschreitungswert, der ein unendliche Wartezeit, z.B. bei einem durch einen Klienten verursachten Absturz, vermeiden soll. In Zeile (15) wird der Fehlercode für eine Zeitüberschreitung ("TimeOut") geprüft.

Um diesen Anhaltepunkt in einen Austauschpunkt umzuwandeln, ist das Beispiel für "Port::receive" geändert worden, welches dann zu einem austauschbaren Thread gehört:

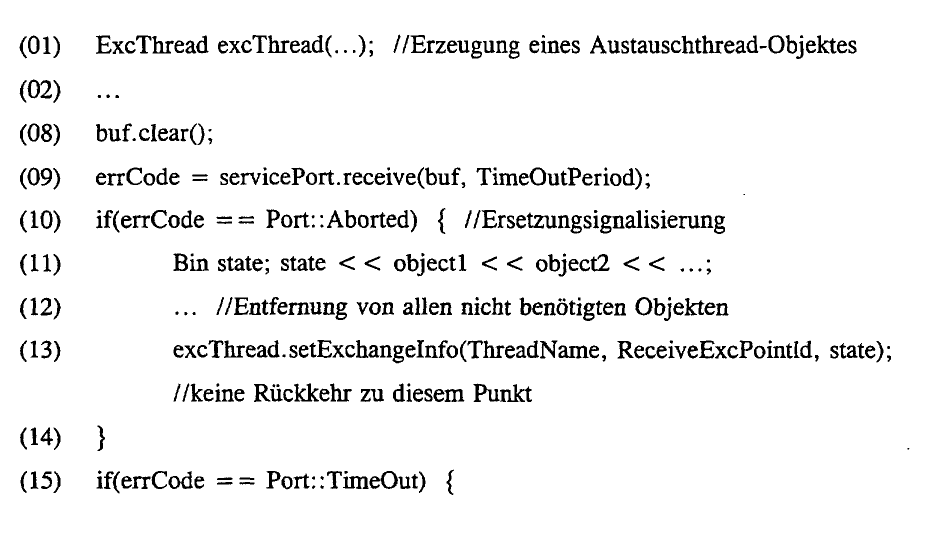

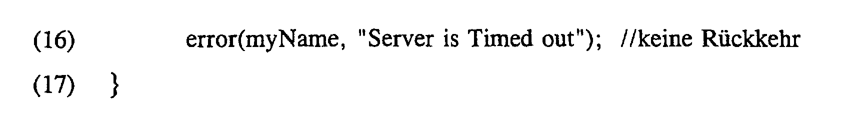

Das obige Beispiel gibt die für den Austausch wesentlichen Programmteile eines Austauschthread-Objektes an (Zeile (01)). Es werden nur die gegenüber dem nichtaustauschbaren Beispiel "Port::receive" neu hinzugekommenden Zeilen erläutert. In Zeile (10) wird der Fehlercode "Port::Aborted" geprüft, um festzustellen, ob ein Austausch signalisiert worden ist. Wenn ein Austausch durchgeführt werden soll, werden zuerst die Zustände der lokalen Objekte des Threads gesammelt (Zeile (11)). Die Zustände werden in einem speziellen Objekt vom Typ "Bin" gesammelt, welcher die Operatoren " < <" " und " > >" " definiert. Der Operator " < <" sammelt die Zustände eines Objektes und der Operator " > > " stellt sie wieder her. Dann kann der Thread Objekte löschen und andere Maßnahmen vollziehen, um keine Resourcen zu verschwenden (Zeile (12)). Nach dem letzten Aufruf von "excThread.setExchangeInfo" werden die gesammelten Zustände von dem Austauschthread an den neuen Prozeß übertragen (Zeile (13)). Der erste Parameter (ThreadName) gibt den aufgerufenen Thread an, der zweite Parameter (ReceiveExcPointld) ist eine Integer-Variable, die den Austauschpunkt innerhalb des aufgerufenen Threads angibt und der dritte Parameter (state) gibt die zu liefernden Zustände an. Der Thread kehrt niemals von "setExchangeInfo" zurück.

Nachdem ein Austauschthread die Zustände eines alten Prozesses an einem Austauschpunkt eingesammelt und den alten Prozeß gestoppt hat, ist es erforderlich, die Threads von einem neuen Prozeß an einem entsprechenden Punkt (Restartpunkt) zu starten. Hierbei kann das Problem auftauchen, daß der Restartpunkt in einer Funktion liegt, die erst nach Aufruf verschiedener anderer Funktionen erreicht wird. Daher sollte nach dem Aufruf des neuen Prozesses zuerst der Restartpunkt ohne Ausführung anderer Statements erreicht werden. Dies kann beispielsweise in Funktionen der Programmiersprache C++ mittels des "goto"-Befehls erreicht werden. Hierbei wird am Beginn einer Funktion zuerst zu der Funktion gesprungen, welche den Restartpunkt enthält. Dies kann auch über mehrere Funktionsebenen erfolgen. Nach Erreichen des Restartpunktes werden die Zustandsvariablen neu gesetzt und der neue Prozeß mit dem Statement weitergeführt, welches vor dem Abbruch das nächste entsprechende Statement im alten Prozeß gewesen wäre. Anhand des untenstehenden Beispiels kann gezeigt werden, wie dies praktisch funktioniert:

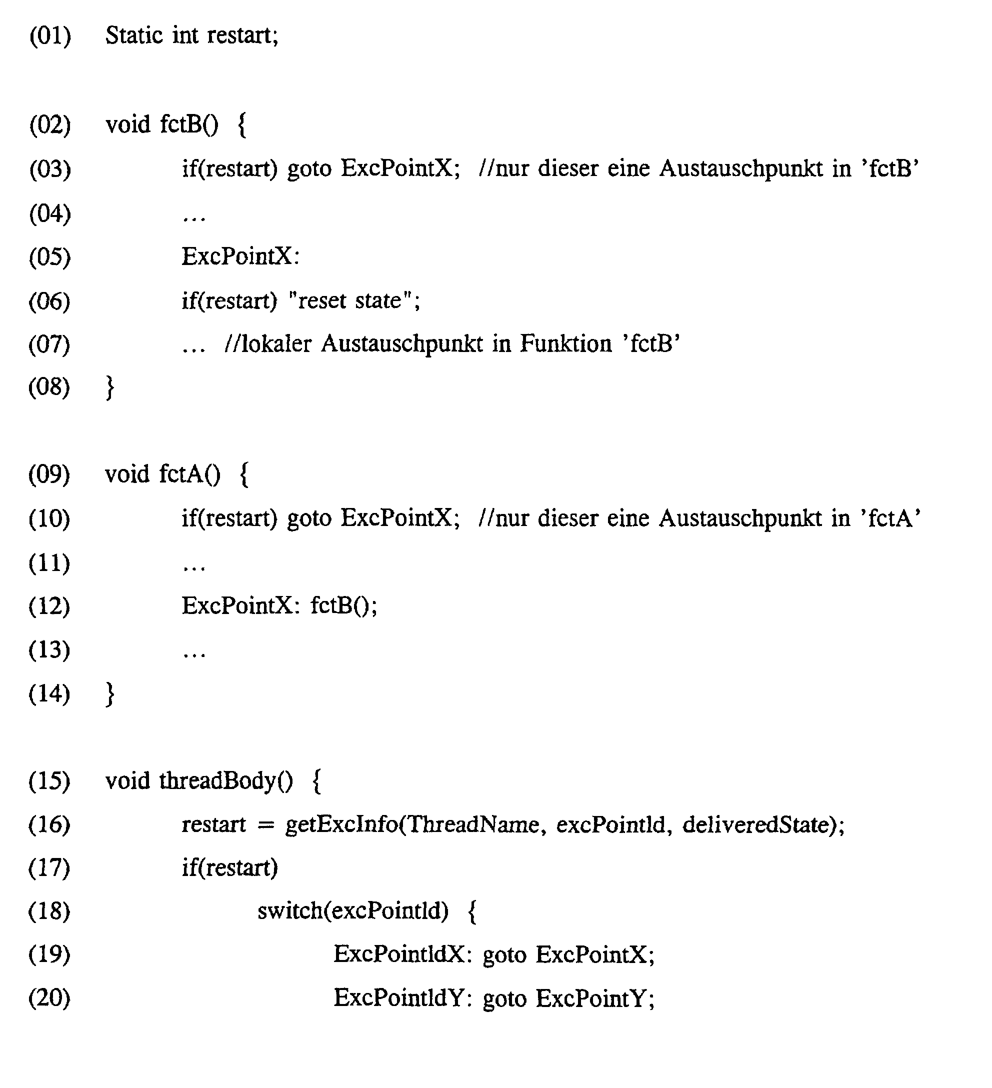

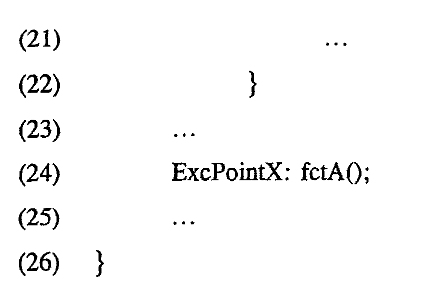

Die Funktion "threadBody" (Zeile (15)) ruft die Funktion "fctA" und diese die Funktion "fctB", welche den Restartpunkt enthält. Zuerst wird also in der Funktion "threadBody" überprüft, ob "restart" wahr ist (Zeile (17)). Falls dies der Fall ist wird der entsprechende Restartpunkt gewählt und zu dem entsprechenden Sprungziel gesprungen (ExcPointX; Zeile (24)). Dort wird die Funktion "fctA" aufgerufen. Innerhalb der Funktion "fctA" (Zeile (09) bis (14)) wird dieselbe Prozedur wiederholt. Am Sprungziel "ExcPointX" (Zeile (12)) wird die Funktion "fctB" und zum Sprungziel "ExcPointX" (Zeile (05)) innerhalb der Funktion "fctB" (Zeile (02) bis (08)) gesprungen.

Nachdem der Restartpunkt erreicht worden ist, müssen die Objekte wieder rekonstruiert werden. Zur Veranschaulichung soll das schon oben aufgeführte Beispiel "Port::receive" dienen, welches zusätzlich eine Zustandstransformation enthält. Diese Zustandstransformation ist bei dem unten aufgeführten Beispiel in den Zeilen (01) bis (05) aufgeführt:

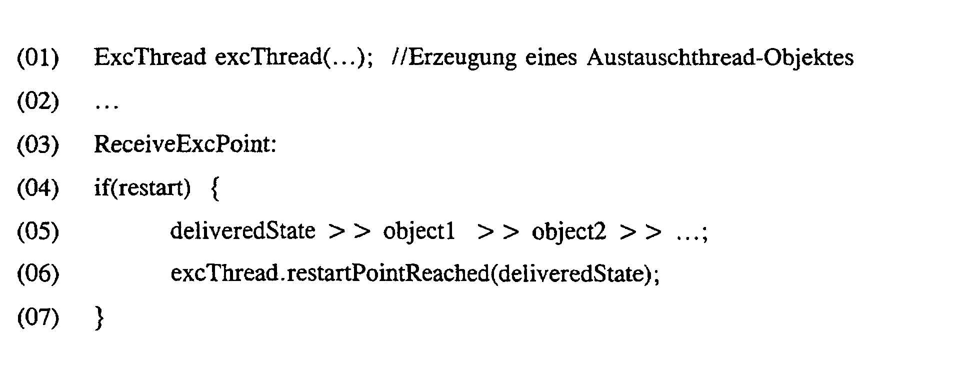

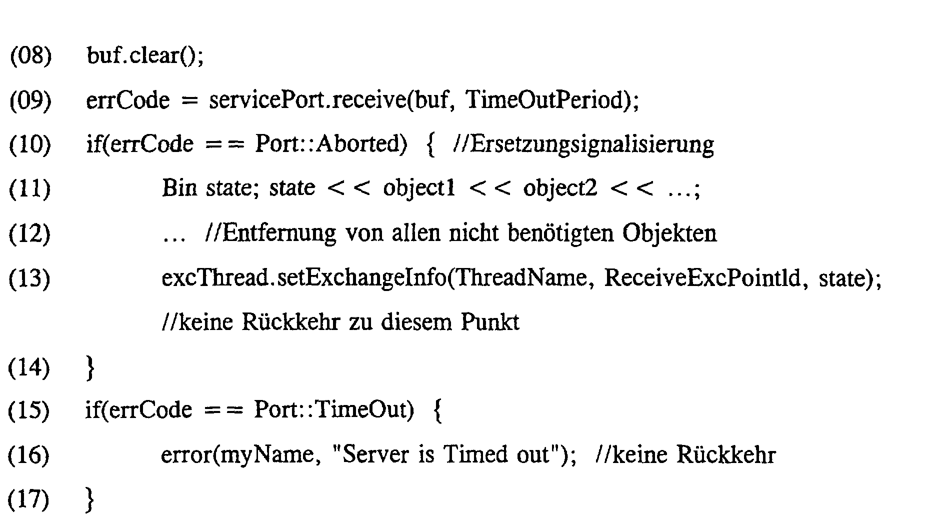

Die Rekonstruktion der Zustände nach dem Austausch (vgl. Zeile (05)) endet mit einem Aufruf der Methode "excThread.restartPointReached" (Zeile (06)). Dadurch wird der gleichzeitige Start aller Anwendungsthreads in dem neuen Prozeß gesichert. Der Parameter "deliveredState" von "restartPointReached" wird benötigt, um zu prüfen, ob der Zustand richtig gelesen worden ist.

Wie oben schon ausgeführt, kommunizieren Prozesse über Ports. Daher müssen die Ports des alten Prozesses auch im neuen Prozeß vorhanden sein (Port-Wanderung). Bei dem Betriebssystem CHORUS ist eine Port-Wanderung leicht zu implementieren. Der Zustand eines Ports wird auf dieselbe Weise übertragen wie der Zustand anderer Objekte. Der einzige Unterschied ist, daß der Zustand eines Ports mit der speziellen Methode "Port::migrate" transferiert wird. Ein Programmbeispiel, welches Bestandteil des alten Prozesses ist, ist nachstehend aufgeführt:

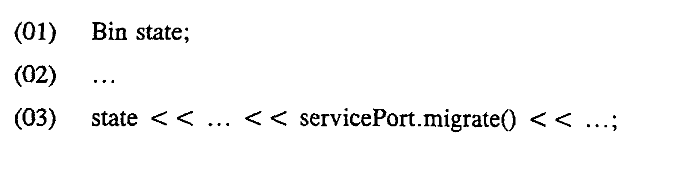

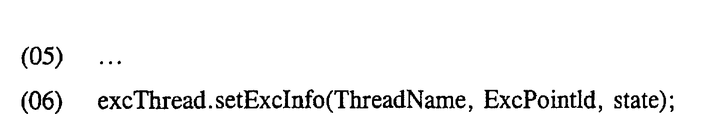

Das gewanderte Port wird direkt aus dem gelieferten Zustand in dem neuen Prozeß aufgebaut. Während der Zeit, welche für die Bearbeitung der Methode "Port::migrate" verwendet wird, geht keine externe Nachricht verloren. Alle noch ankommenden Nachrichten werden in eine Warteschlange des Ports eingereiht und dem neuen Prozeß zusammen mit dem Port geliefert.

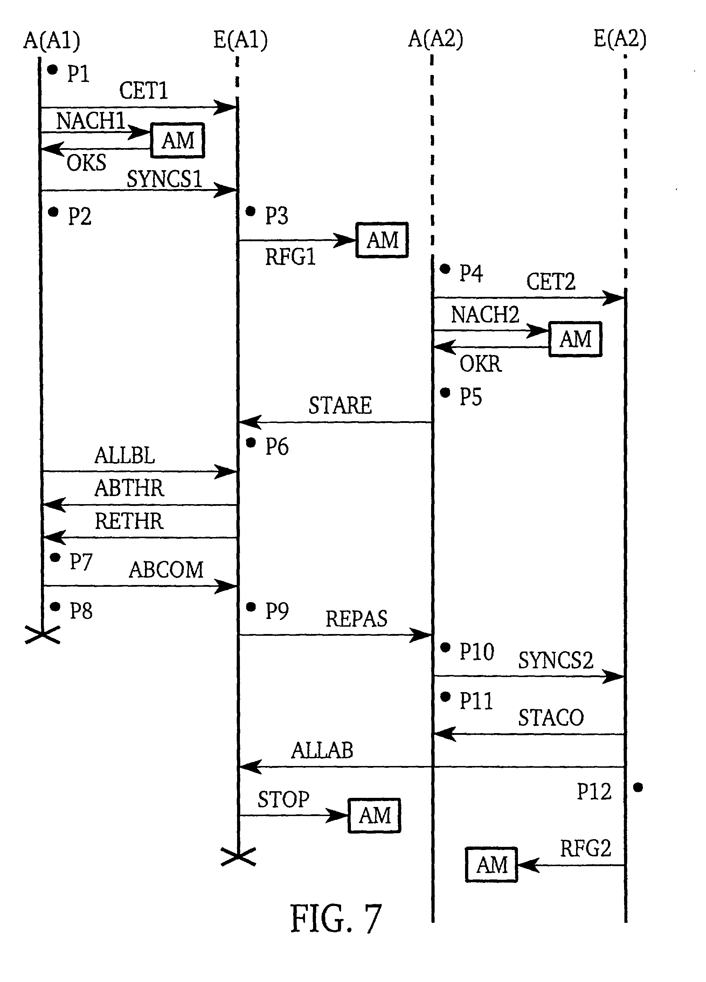

Fig. 7 zeigt zur weiteren Erläuterung des Austauschprozesses ein Nachrichtenflußdiagramm. Zuerst wird der Prozeß A1 gestartet. Der Prozeß A1 soll durch einen Prozeß A2 ersetzt werden. Der Prozeß A1 stellt also eine Vorgängerkomponente und der Prozeß A2 eine Nachfolgerkomponente dar. Gesteuert wird der Austausch von einem Austauschmanager AM (Replacement Server), der als spezielle Softwarekomponente in einem Knoten untergebracht ist. In der Fig. 7 ist der Austauschmanagers AM jeweils als Rechteck mit der Bezeichnung AM dargestellt.

Das Nachrichtenflußdiagramm in Fig. 7 zeigt die Beziehungen der Anwendungsthreads der Prozesse A1 und A2 und ihren jeweiligen Austauschthreads E(A1) und E(A2). Zur Vereinfachung ist im Nachrichtenflußdiagramm der Fig. 7 nur ein Anwendungsthread A(A1) und A(A2) für jeden Prozeß A1 und A2 aufgeführt. Der Nachrichtenfluß, der durch verschiedene Mechanismen (z.B.: "Port::send/Port::receive"; "Semaphore::get/ Semaphore::rel") realisiert wird, wird jeweils durch Pfeile gekennzeichnet.

Im Nachrichtenflußdiagramm von Fig. 7 wird zuerst der Prozeß A1 geladen und gestartet (Punkt P1). Dieser erzeugt den Austauschthread E(A1) (Pfeil CET) und gibt eine Nachricht (Pfeil NACH1) an den Austauschmanager AM. Der Austauschmanager AM antwortet (Pfeil OKS) und gibt damit an, daß keine Nachfolgerkomponente existiert. Anschließend synchronisiert ein Anwendungsthread A(A1) des Prozesses A1 den Start des Austauschthreads E(A1) des Prozesses A1 (Pfeil SYNCS1). Danach gehen die Anwendungsthreads zu ihren eigentlichen Aufgaben über (Punkt P2).

Nach der Synchronisierung des Starts des Austauschthreads E(A1) des Prozesses A1 durch einen Anwendungsthread A(A1) des Prozesses A1 setzt der Austauschthread E(A1) seine Priorität kleiner als die Priorität der Anwendungsthreads A(A1) (Punkt P3). Dies wird durchgeführt, um den Einfluß des Austauschthreads E(A1) auf die Anwendungsthreads A(A1) so gering wie möglich zu halten. Weiter wird am Punkt P3 von dem Austauschthread E(A1) ein Austausch-Port erzeugt, damit dieser für die Nachfolgerkomponente (Prozeß A2) erreichbar ist. Danach signalisiert der Austauschthread E(A1) dem Austauschmanager AM, daß er für einen Austausch bereit ist (Pfeil RFG1).

Wenn der Prozeß A2 als Nachfolgerkomponente des Prozesses A1 (Vorgängerkomponente) geladen und gestartet (Punkt P4) und ein Austauschthread E(A2) des zweiten Prozesses A2 erzeugt worden ist (Pfeil CET2), wird zuerst eine Nachricht (Pfeil NACH2) an den Austauschmanager AM gesendet. Der Austauschmanager AM sendet eine Antwort (Pfeil OKR) an einen der Anwendungsthreads A(A2) des Prozesses 2, die angibt, daß die Nachfolgerkomponente eine Vorgängerkomponente (Prozeß A1) zu ersetzen hat. Daraufhin erzeugt dieser Anwendungsthreads des Prozesses A2 eine entsprechende Referenz auf das Austausch-Port (Punkt P5) der Vorgängerkomponente und meldet dem Austauschthread E(A1) des Prozesses A1, daß die Austauschprozedur begonnen hat (Pfeil STARE).

Durch diese Nachricht des Prozesses A2 wird der Austauschthread E(A1) des ersten Prozesses aktiviert. Als erstes macht dieser seinen Austausch-Port unzugänglich, damit vermieden wird, daß eine andere Komponente (Prozeß) eine Austauschnachricht sendet (Punkt P6). Wenn alle Anwendungsthreads A(A1) des Prozesses A1 angehalten haben, empfängt der Austauschthread E(A1) die Nachricht, daß alle Threads angehalten haben (Pfeil ALLBL), und gibt daraufhin einen Abbruchbefehl (Pfeil ABTHR) an alle Anwendungsthreads A(A1) des ersten Prozesses A1. Nach Empfang eines Befehls (Pfeil RETHR) zum Fortsetzen der Austauschprozedur von dem Austauschthread E(A1) des ersten Prozesses A1, sammelt jeder Anwendungsthread A(A1) des ersten Prozesses A1 seine Zustände (Punkt P7), sendet ein Bestätigungssignal (Pfeil ABCOM) an den Austauschthread E(A1) und löscht sich zum Schluß selbst (Punkt P8).

Der Austauschthread E(A1) des ersten Prozesses A1 sammelt die verschiedenen Zustände der Anwendungsthreads A(A1) des ersten Prozesses A1 (Punkt P9) und sendet diese zu dem Anwendungsthread A(A2) des zweiten Prozesses A2 (Pfeil REPAS), der den Beginn der Austauschprozedur gemeldet hat (siehe Pfeil STARE). Der empfangene Zustand wird an die Anwendungsthreads A(A2) weitergeleitet (Punkt P10), die ihren Teil des Zustands übernehmen und ihre Objekte daraus rekonstruieren (Punkt P11). Gleichzeitig wird der Austauschthread E(A2) entsprechend informiert (Pfeil SYNCS2), der dann nach Erreichen aller Restartpunkte die Anwendungsthreads A(A2) zur Ausführung ihrer eigentlichen Aufgabe freigibt (Pfeil STACO).

Zum Schluß signalisiert der Austauschthread E(A2) des zweiten Prozesses A2 dem Austauschthread (E(A1) des ersten Prozesses A1, das die Austauschprozedur beendet ist (Pfeil ALLAB). Der Austauschthread E(A1) des ersten Prozesses A1 sendet eine Stopnachricht zum Austauschmanager (Pfeil STOP) und beendet sich selbst. Der Austauschthread E(A2) des zweiten Prozesses A2 bereitet sich dann darauf vor, daß er später durch eine Nachfolgerkomponente abgelöst wird. Hierbei erzeugt er einen Austausch-Port, setzt sich auf die geringste Priorität (Punkt P12) und signalisiert dem Austauschmanager AM, daß er für einen Austausch bereit ist (Pfeil RFG2).

## Patentansprüche

1. Kommunikationssystem mit einer Steuerschaltung (3; 7, 8; 28), welche
- ein nachrichtenorientiertes Betriebssystem (4), Anwendungssoftware (5, 9) und Mittel zum Austausch von Anwendungssoftware (5, 9) enthält, und
- im Austauschfall dazu vorgesehen ist, eine zu ersetzende, alte Softwarekomponente zu veranlassen einen Zustandstransfer durchzuführen und an einem bestimmten Punkt anzuhalten und einer neuen Softwarekomponente die anliegenden Nachrichten zuzuleiten,
**dadurch gekennzeichnet,**
**daß** die Anwendungssoftware wenigstens einen Prozeß mit wenigstens einem Anwendungsthreads (14) und einem Austauschthread (16) enthält,
**daß** ein alter, zum Austausch vorgesehener Prozeß wenigstens zur Sammlung seiner Zustände vorgesehen ist, nachdem die Anwendungsthreads (14) des alten Prozesses an einem Austauschpunkt angehalten haben, und
**daß** der Austauschthread (14) des alten Prozesses wenigstens zur Übertragung der Zustände über Austausch-Ports (17; 22, 23) an einen neuen Prozeß vorgesehen ist.

2. Kommunikationssystem nach Anspruch 1,
**dadurch gekennzeichnet,**
**daß** ein Anwendungsthread (14) einen ersten Teil zur Sammlung wenigstens der Zustände des Anwendungsthreads (14) eines alten, zum Austausch vorgesehenen Prozesses enthält und zur Lieferung der gesammelten Zustände zum Austauschthread (16) des alten Prozesses vorgesehen ist und
**daß** ein Anwendungsthread (14) eines neuen Prozesses einen zweiten Teil zur Übernahme der Zustände von dem Austauschthread (16) des alten Prozesses und zur Rekonstruktion von auf die Zustände bezogenen Objekten enthält.

3. Kommunikationssystem nach Anspruch 1 oder 2,
**dadurch gekennzeichnet,**
**daß** die Steuerschaltung (3; 7, 8; 28) einen Austauschmanager (6, 12) als weitere Softwarekomponente enthält, die zum Laden und Starten eines Prozesses und zur Kennzeichnung vorgesehen ist, ob ein neu gestarteter Prozeß einen alten Prozeß zu ersetzen hat.

4. Kommunikationssystem nach Anspruch 1, 2 oder 3,
**dadurch gekennzeichnet,**
**daß** nach dem Laden und Starten eines neuen Prozesses, der zum Austausch eines alten Prozesses vorgesehen ist, zuerst ein Sprung zu einem dem Austauschpunkt des alten Prozesses entsprechenden Austauschpunkt durch Überspringen normaler Programmabläufe vorgesehen ist.

5. Kommunikationssystem nach einem der Ansprüche 1 bis 4,
**dadurch gekennzeichnet,**
**daß** bei einem vorgesehenen Austausch von mehreren Prozessen diese jeweils hintereinander zum Austausch vorgesehen sind.

6. Kommunikationssystem nach einem der Ansprüche 1 bis 5,
**dadurch gekennzeichnet,**
**daß** eine Wartungsvorrichtung (2, 29) zur Lieferung einer neuen Softwarekomponente über ein Übertragungsmedium an den Austauschmanager (6, 12) vorgesehen ist.

7. Computersystem mit wenigstens einem Computer (1; 7, 8), welche
- ein nachrichtenorientiertes Betriebssystem (4), Anwendungssoftware (5, 9) und Mittel zum Austausch von Anwendungssoftware (5, 9) enthält, und
- im Austauschfall dazu vorgesehen ist, eine zu ersetzende, alte Softwarekomponente zu veranlassen einen Zustandstransfer durchzuführen und an einem bestimmten Punkt anzuhalten und einer neuen Softwarekomponente die anliegenden Nachrichten zuzuleiten,
**dadurch gekennzeichnet,**
**daß** die Anwendungssoftware wenigstens einen Prozeß mit wenigstens einem Anwendungsthreads (14) und einem Austauschthread (16) enthält,
**daß** ein alter, zum Austausch vorgesehener Prozeß wenigstens zur Sammlung seiner Zustände vorgesehen ist, nachdem die Anwendungsthreads (14) des alten Prozesses an einem Austauschpunkt angehalten haben, und
**daß** der Austauschthread (14) des alten Prozesses wenigstens zur Übertragung der Zustände über Austausch-Ports (17; 22, 23) an einen neuen Prozeß vorgesehen ist.

8. Verfahren zum Austausch von Softwarekomponenten für ein System mit einem nachrichtenorientierten Betriebssystem (4), Anwendungssoftware (5, 9) und Mittel zum Austausch von Anwendungssoftware (5, 9),
bei dem im Austauschfall eine zu ersetzende, alte Softwarekomponente veranlaßt wird, einen Zustandstransfer durchzuführen und an einem bestimmten Punkt anzuhalten und einer neuen Softwarekomponente die anliegenden Nachrichten zuzuleiten,
**dadurch gekennzeichnet,**
**daß** die Anwendungssoftware wenigstens einen Prozeß mit wenigstens einem Anwendungsthreads (14) und einem Austauschthread (16) enthält,
**daß** ein alter, zum Austausch vorgesehener Prozeß wenigstens seine Zustände sammelt, nachdem die Anwendungsthreads (14) des alten Prozesses an einem Austauschpunkt angehalten haben, und
**daß** der Austauschthread (14) des alten Prozesses wenigstens die Zustände über Austausch-Ports (17; 22, 23) an einen neuen Prozeß überträgt.

## Claims

1. A communication system comprising a control circuit (3; 7, 8; 28), which control circuit
- includes a message-oriented operating system (4), application software (5, 9) and means for exchanging application software (5, 9), and
- when application software is exchanged, causes an old software component to be replaced to carry out a state transfer and stop at a certain point to direct the available messages to a new software component,
**characterized in that** the application software includes at least a process with at least an application thread (14) and an exchange thread (16), **in that** an old process to be exchanged is at least provided for gathering its states after the application threads (14) of the old process have stopped at an exchange point, and **in that** the exchange thread (14) of the old process is used at least for transferring the states to a new process through exchange ports (17; 22, 23).

2. A communication system as claimed in Claim 1, **characterized in that** an application thread (14) has a first partition for gathering at least the states of the application thread (14) of an old process to be exchanged, and is used for delivering the gathered states to the exchange thread (16) of the old process and **in that** an application thread (14) of a new process has a second partition for taking over the states from the exchange thread (16) of the old process and for reconstructing objects related to the states.

3. A communication system as claimed in Claim 1 or 2, **characterized in that** the control circuit (3; 7, 8; 28) includes a replacement server (6, 12) as a further software component, which is used for loading and starting a process and for identifying whether a newly started process is to replace an old process.

4. A communication system as claimed in Claim 1, 2 or 3, **characterized in that** after the loading and starting of a new process which is used for exchanging an old process, first a jump is made to an exchange point that corresponds to the exchange point of the old process **in that** normal program routines are skipped.

5. A communication system as claimed in one of the Claims 1 to 4, **characterized in that** when a plurality of processes are to be exchanged, these processes are exchanged consecutively.

6. A communication system as claimed in one of the Claims 1 to 5, **characterized in that** a maintenance device (2, 29) is used for delivering a new software component to the replacement server (6, 12) via a transmission medium.

7. A computer system comprising at least a computer (1; 7, 8), which system
- includes a message-based operating system (4), application software (5, 9) and means for exchanging application software (5, 9), and
- when application software is exchanged, causes an old software component to be replaced to carry out a state transfer and stop at a certain point to direct the available messages to a new software component,
**characterized in that** the application software includes at least a process with at least an application thread (14) and an exchange thread (16), **in that** an old process to be exchanged is at least provided for gathering its states after the application threads (14) of the old process have stopped at an exchange point, and **in that** the exchange thread (14) of the old process is used at least for transferring the states to a new process through exchange ports (17; 22, 23).

8. A method for exchanging software components for a system comprising a message-based operating system (4), application software (5, 9) and means for exchanging application software (5, 9), in which, when application software is exchanged, causes an old software component to be replaced to carry out a state transfer and stop at a certain point to direct the available messages to a new software component, **characterized in that** the application software includes at least a process with at least an application thread (14) and an exchange thread (16), **in that** an old process to be exchanged is at least provided for gathering its states after the application threads (14) of the old process have stopped at an exchange point, and **in that** the exchange thread (14) of the old process is used at least for transferring the states to a new process through exchange ports (17; 22, 23).

## Revendications

1. Système de communication avec un circuit de commande (3;7,8;28)
- qui contient un système d'exploitation (4) orienté sur les messages, un logiciel d'application (5, 9) et des moyens d'échange du logiciel d'application et
- dans lequel, en cas d'échange, il est prévu d'amener un ancien composant logiciel à remplacer à procéder à un transfert d'état, à s'arrêter à un point déterminé et à amener les messages appliqués à un nouveau composant logiciel et des moyens d'échange du logiciel d'application,
**caractérisé en ce**
**que** le logiciel d'application contient au moins un processus avec au moins un thread d'application (14) et un thread d'échange (16),
**qu'**un ancien processus prévu pour l'échange est destiné au moins à recueillir ses états, après quoi les threads d'application (14) de l'ancien processus sont arrêtés à un point d'échange et
**que** le thread d'échange (14) de l'ancien processus est prévu au moins pour la transmission des états par l'intermédiaire des ports d'échange (17; 22, 23) à un nouveau processus.

2. Système de communication selon la revendication 1,
**caractérisé en ce**
**qu'**un thread d'application (14) contient une première partie pour la collecte au moins des états des threads d'application (14) d'un ancien processus destiné à l'échange et est prévu pour la délivrance des états recueillis sur le thread d'échange (16) de l'ancien processus et
**qu'**un thread d'application (14) d'un nouveau processus contient une deuxième partie pour la prise en charge des états par le thread d'échange (16) de l'ancien processus et pour la reconstruction des objets rapportés aux états.

3. Système de communication selon l'une des revendications 1 ou 2,
**caractérisé en ce**
**que** le circuit de commande (3; 7, 8, 28) contient un gestionnaire d'échange (6, 12) comme composant logiciel supplémentaire qui est prévu pour charger et lancer un processus et pour caractériser si un nouveau processus entamé doit remplacer un ancien processus.

4. Système de communication selon l'une des revendications 1, 2 ou 3,
**caractérisé en ce**
**qu'**après le chargement et le déchargement d'un nouveau processus qui est prévu pour l'échange d'un ancien processus, il est d'abord prévu un saut vers un point d'échange correspondant au point d'échange de l'ancien processus en sautant les étapes normales du programme.

5. Système de communication selon l'une des revendications 1 à 4,
**caractérisé en ce**
**que**, si le remplacement de plusieurs processus est prévu, ceux-ci sont respectivement prévus successivement pour l'échange.

6. Système de communication selon l'une des revendications 1 à 5,
**caractérisé en ce**
**qu'**il est prévu un dispositif de maintenance (2, 29) pour la délivrance d'un nouveau composant logiciel par l'intermédiaire d'un dispositif de transmission au gestionnaire d'échange (6, 12).

7. Système informatique avec au moins un ordinateur (1; 7, 8) qui
- contient un système d'exploitation (4) orienté sur les messages, un logiciel d'application (5, 9) et des moyens d'échange du logiciel d'application (5, 9) et
- est prévu en cas d'échange pour amener un ancien composant logiciel à remplacer à effectuer un transfert d'état, à s'arrêter à un point déterminé et à amener à un nouveau composant logiciel les messages présents,
**caractérisé en ce**
**que** le logiciel d'application contient au moins un processus avec au moins un thread d'application (14) et un thread d'échange (16),
**qu'**un ancien processus prévu pour l'échange est destiné au moins à recueillir ses états, après quoi les threads d'application (14) de l'ancien processus sont arrêtés à un point d'échange et
**que** le thread d'échange (14) de l'ancien processus est prévu au moins pour la transmission des états par l'intermédiaire des ports d'échange (17; 22, 23) à un nouveau processus.

8. Procédé d'échange de composants logiciels pour un système avec un système d'exploitation (5) orienté sur les messages, un logiciel d'application (5, 9) et des moyens d'échange de logiciels d'application (5, 9),
dans lequel, en cas de remplacement, un ancien composant logiciel à remplacer est amené à procéder à un transfert d'état, à s'arrêter à un point déterminé et à amener les messages appliqués à un nouveau composant logiciel,
**caractérisé en ce**
**que** le logiciel d'application contient au moins un processus avec au moins un thread d'application (14) et un thread d'échange (16),
**qu'**un ancien processus prévu pour l'échange collecte au moins ses états après que les threads d'application (14) de l'ancien processus se sont arrêtés à un point d'échange et
**que** le thread d'échange (14) de l'ancien processus transmet au moins les états par l'intermédiaire de ports d'échange (17; 22, 23) à un nouveau processus.
